# EUROPEAN PATENT APPLICATION

(11) **EP 4 333 188 A1**
(43) Date of publication of application: **06.03.2024**
(21) Application number: 22795624.0
(22) Date of filing: 18.04.2022
(51) Int. Cl.: H01M 50/443, H01G 11/06, H01G 11/52, H01M 50/403, H01M 50/42, H01M 50/434, H01M 50/451, H01M 50/489

(54) **COMPOSITION FOR ELECTROCHEMICAL ELEMENT FUNCTIONAL LAYER, METHOD FOR PRODUCING SAID COMPOSITION, FUNCTIONAL LAYER FOR ELECTROCHEMICAL ELEMENT, LAMINATE FOR ELECTROCHEMICAL ELEMENT, AND ELECTROCHEMICAL ELEMENT**

(30) Priority: 28.04.2021 JP 2021076620
(71) Applicant: Zeon Corporation, Tokyo 100-8246 (JP)
(72) Inventor: TAGUCHI, Hiroyuki, Tokyo 100-8246 (JP)
(74) Representative: Maiwald GmbH
(86) International application number: PCT/JP2022/018057
(87) International publication number: WO 2022/230711

(57) **Abstract**

A composition for an electrochemical device functional layer contains a binder and a particulate polymer having a sea-island structure such that the number of island phases per unit area, in cross-section observation according to specific conditions, is not less than 1 and not more than 200.

## Description

### TECHNICAL FIELD

The present disclosure relates to a composition for an electrochemical device functional layer and method of producing the same, a functional layer for an electrochemical device, a laminate for an electrochemical device, and an electrochemical device.

### BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications.

A lithium ion secondary battery, for example, typically includes battery members such as a positive electrode, a negative electrode, and a separator that isolates the positive electrode and the negative electrode from each other and prevents short-circuiting between the positive and negative electrodes.

In recent years, further improvements to electrochemical device members such as positive electrodes, negative electrodes, and separators have been studied with the aim of achieving even higher performance in lithium ion secondary batteries. In the course of such improvements, the stacking of a layer for displaying an expected function such as heat resistance or adhesiveness on a separator substrate has been attempted.

As one specific example, Patent Literature (PTL) 1 discloses a composition for an electrochemical device functional layer that contains a binder, inorganic particles, and a particulate polymer having an average circularity of not less than 0.90 and less than 0.99 and a volume-average particle diameter of not less than 1.0 µm and not more than 10.0 µm. As another example, PTL 2 discloses an adhesive resin composition for a secondary battery in which an adhesive resin having a core-shell heterophase structure and/or a sea-island heterophase structure is compounded. An adhesive resin having a core-shell heterophase structure is actually synthesized in the examples of PTL 2.

### CITATION LIST

### Patent Literature

PTL 1: WO2020/175292A1
PTL 2: JP6051731B2

### SUMMARY

### (Technical Problem)

In recent years, there has been a need for novel compositions for functional layers in view of even further improving the performance of electrochemical devices. Accordingly, one object of the present disclosure is to provide a composition for a functional layer containing a particulate polymer that has a novel structure and a method of producing this composition for a functional layer. Another object of the present disclosure is to provide a laminate for an electrochemical device that includes a functional layer for an electrochemical device formed using a presently disclosed composition for a functional layer and an electrochemical device that includes this laminate for an electrochemical device.

### (Solution to Problem)

The inventor made extensive studies to achieve the foregoing objects. The inventor created a composition for an electrochemical device functional layer containing a binder and a particulate polymer having a sea-island structure such that the number of island phases per unit area, in cross-section observation according to specific conditions, is not less than 1 and not more than 200.

Specifically, the present disclosure aims to advantageously solve the problem set forth above, and a presently disclosed composition for an electrochemical device functional layer comprises a particulate polymer and a binder, wherein the particulate polymer has a sea-island structure including an island phase formed of a polymer A and a sea phase formed of a polymer B, and the particulate polymer satisfies a number of the island phase per unit area of 1 µm² being not less than 1 and not more than 200 as calculated by: acquiring a cross-sectional image of a plurality of particles of the particulate polymer; selecting and adopting as observation subjects a plurality of cross-sections each having a circumscribed circle diameter within a range of not less than 0.6 times and not more than 1.2 times volume-average particle diameter of the particulate polymer from among cross-sections of the plurality of particles of the particulate polymer that are included in the cross-sectional image; and calculating a number of island phases having a diameter that is 1/5 or less of the volume-average particle diameter per unit area of 1 µm² for the plurality of cross-sections of the particulate polymer that are selected as observation subjects. The composition for a functional layer containing the particulate polymer having a sea-island structure in which the number of island phases per unit area, in cross-section observation according to specific conditions, is not less than 1 and not more than 200 in this manner is a composition for a functional layer that contains a particulate polymer having a novel structure.

Note that the structure of a particulate polymer can be confirmed by a method described in the EXAMPLES section. Also note that the volume-average particle diameter of the particulate polymer is the particle diameter D50 at which cumulative volume calculated from a small diameter end reaches 50% in a laser diffraction method and can be measured by a method described in the EXAMPLES section.

In the presently disclosed composition for an electrochemical device functional layer, the volume-average particle diameter of the particulate polymer is preferably not less than 1.0 µm and not more than 10.0 µm. When the composition for an electrochemical device functional layer contains a particulate polymer that satisfies the structure set forth above and that has a volume-average particle diameter within the range set forth above, uniformity and adhesiveness of a functional layer can be increased.

Note that the volume-average particle diameter of a particulate polymer can be measured according to a method described in the EXAMPLES section.

The presently disclosed composition for an electrochemical device functional layer preferably further comprises heat-resistant fine particles. When the composition for an electrochemical device functional layer further contains heat-resistant fine particles, heat resistance can be imparted to an obtained functional layer.

In the presently disclosed composition for an electrochemical device functional layer, the polymer A preferably includes a (meth)acrylic acid ester monomer unit. When the polymer A forming an island phase of the particulate polymer includes a (meth)acrylic acid ester monomer unit, excessive lowering of the glass-transition temperature of the particulate polymer can be inhibited, and blocking of an obtained functional layer during storage can be inhibited. Note that a property of having low tendency for blocking to occur is also referred below to as "blocking resistance".

Also note that in the present specification, "(meth)acryl" is used to indicate "acryl" or "methacryl". Moreover, when a polymer is said to "include a monomer unit" in the present specification, this means that "a polymer obtained using that monomer includes a structural unit derived from the monomer".

In the presently disclosed composition for an electrochemical device functional layer, the polymer A preferably has a glass-transition temperature of higher than 20°C and not higher than 90°C. When the glass-transition temperature of the polymer A that forms an island phase of the particulate polymer is within the range set forth above, blocking resistance and process adhesiveness can be increased.

Note that the glass-transition temperature of the polymer A can be measured according to a method described in the present specification.

In the presently disclosed composition for an electrochemical device functional layer, a content ratio of the polymer A based on contained mass of the polymer B is preferably not less than 0.1 mass% and not more than 20 mass%. When the content ratio of the polymer A based on contained mass of the polymer B is not less than 0.1 mass% and not more than 20 mass%, it is possible to cause desired attributes that can be displayed by the polymer A and desired attributes that can be displayed by the polymer B to be displayed in a good balance.

In the presently disclosed composition for an electrochemical device functional layer, the polymer B preferably has a degree of swelling in electrolyte solution S^{B} of not less than × 1.0 and not more than ×8.0. When the degree of swelling in electrolyte solution S^{B} of the polymer B is not less than × 1.0 and not more than ×8.0, adhesiveness of an obtained functional layer after immersion in electrolyte solution can be increased, and injectability of the functional layer can be increased.

Note that the "degree of swelling in electrolyte solution" of a polymer can be measured according to a method described in the EXAMPLES section.

In the presently disclosed composition for an electrochemical device functional layer, the polymer A preferably has a degree of swelling in electrolyte solution S^{A} of ×4.0 or more. When the degree of swelling in electrolyte solution S^{A} of the polymer A is ×4.0 or more, adhesiveness of an obtained functional layer after immersion in electrolyte solution can be increased.

In the presently disclosed composition for an electrochemical device functional layer, a degree of swelling in electrolyte solution S^{A} of the polymer A is preferably at least 1.2 times a degree of swelling in electrolyte solution S^{B} of the polymer B. When the degree of swelling in electrolyte solution S^{A} of the polymer A is at least 1.2 times the degree of swelling in electrolyte solution S^{B} of the polymer B, adhesiveness of an obtained functional layer after immersion in electrolyte solution can be increased.

Moreover, the present disclosure aims to advantageously solve the problem set forth above, and a presently disclosed method of producing a composition for an electrochemical device functional layer comprises producing the particulate polymer by a suspension polymerization method, a dissolution and suspension method, or a pulverization method. The presently disclosed production method set forth above enables efficient production of a composition for a functional layer containing a particulate polymer that has the novel structure set forth above.

Furthermore, a presently disclosed functional layer for an electrochemical device is a functional layer for an electrochemical device formed using the presently disclosed composition for an electrochemical device functional layer set forth above, wherein the functional layer for an electrochemical device has a structure in which the particulate polymer is partially embedded in a heat-resistant fine particle layer containing the heat-resistant fine particles, and the volume-average particle diameter of the particulate polymer is larger than a thickness of the heat-resistant fine particle layer. The functional layer that has the structure set forth above and in which the volume-average particle diameter of the particulate polymer is larger than the thickness of the heat-resistant fine particle layer has excellent process adhesiveness and excellent adhesiveness after immersion in electrolyte solution.

Also, a presently disclosed laminate for an electrochemical device comprises: a substrate; and a functional layer for an electrochemical device formed on the substrate, wherein the functional layer for an electrochemical device is a functional layer for an electrochemical device formed using the presently disclosed composition for an electrochemical device functional layer set forth above.

Moreover, the presently disclosed electrochemical device comprises the presently disclosed laminate for an electrochemical device set forth above.

### (Advantageous Effect)

According to the present disclosure, it is possible to provide a composition for a functional layer containing a particulate polymer that has a novel structure and a method of producing this composition for a functional layer. Moreover, according to the present disclosure, it is possible to provide a laminate for an electrochemical device that includes a functional layer for an electrochemical device formed using the presently disclosed composition for a functional layer and an electrochemical device that includes this laminate for an electrochemical device.

### DETAILED DESCRIPTION

The following provides a detailed description of embodiments of the present disclosure. The presently disclosed composition for an electrochemical device functional layer (hereinafter, also referred to simply as a "composition for a functional layer") is used to form the presently disclosed functional layer for an electrochemical device (hereinafter, also referred to simply as a "functional layer"). Note that the presently disclosed composition for a functional layer can be efficiently produced according to the presently disclosed production method. Moreover, the presently disclosed laminate for an electrochemical device includes the presently disclosed functional layer. Furthermore, the presently disclosed electrochemical device is an electrochemical device that includes at least the presently disclosed laminate for an electrochemical device.

### (Composition for electrochemical device functional layer)

The presently disclosed composition for an electrochemical device functional layer contains a specific particulate polymer and a binder, and preferably further contains heat-resistant fine particles. The presently disclosed composition for an electrochemical device functional layer may also optionally further contain other components.

### <Particulate polymer>

The particulate polymer contained in the composition for a functional layer has a novel structure. As a result of the particulate polymer having this novel structure, the particulate polymer can display characteristic attributes of a polymer A and a polymer B that form the particulate polymer in a good balance. Note that the particulate polymer may have a particulate form or may have any other form after members are adhered to each other via a functional layer formed using the composition for a functional layer.

### <<Structure of particulate polymer>>

The particulate polymer has a sea-island structure including an island phase formed of the polymer A and a sea phase formed of the polymer B. The term "sea-island structure" refers to a structure in which an isolated phase (island phase) is present in a phase (sea phase) that is formed of a continuous phase. In the present specification, a continuous phase that serves as a matrix is referred to as a sea phase, whereas an island-like isolated separated phase is referred to as an island phase. The shape of the island phase is not specifically limited and can be a roughly circular shape.

### <<Number of island phases per unit area of 1 µm²>>

In the particulate polymer, the number of island phases per unit area of 1 µm², as calculated according to a prescribed method, is required to be not less than 1 and not more than 200. In calculation of the number of island phases per unit area of 1 µm², first a cross-sectional image of a plurality of particles of the particulate polymer is acquired according to a specific method. A plurality of cross-sections each having a circumscribed circle diameter within a range of not less than 0.6 times and not more than 1.2 times the volume-average particle diameter of the particulate polymer are selected from among cross-sections of the plurality of particles of the particulate polymer that are included in the acquired cross-sectional image and are taken to be observation subjects. A feature of the particulate polymer is that when the number of island phases having a diameter that is 1/5 or less of the volume-average particle diameter per unit area of 1 µm² is calculated for the plurality of cross-sections of the particulate polymer that are selected as observation subjects, the calculated number of island phases per unit area of 1 µm² is not less than 1 and not more than 200. Although the calculation method is described in detail in the EXAMPLES section, the method described in the EXAMPLES section is merely one example of the method of particulate polymer cross-section observation, and the observation magnification and the material used for staining can be changed as necessary. As a result of the particulate polymer having a novel structure that satisfies the condition set forth above, it is possible to cause desired attributes that can be displayed by the polymer A and desired attributes that can be displayed by the polymer B to be displayed in a good balance.

Moreover, the number of island phases per unit area of 1 µm² as calculated through cross-section observation according to the method described above is preferably 10 or more, and more preferably 20 or more, and is preferably 150 or less, and more preferably 100 or less. For example, in a case in which the polymer A is a polymer that can display high adhesive capability when caused to swell in electrolyte solution as described further below, the number of island phases per unit area of 1 µm² being not less than any of the lower limits set forth above makes it possible to improve adhesiveness of a functional layer after immersion in electrolyte solution through the polymer A effectively acting as an anchor when displaying adhesive capability. Moreover, in a case in which the polymer A has the same attribute as described above, the number of island phases per unit area of 1 µm² being not more than any of the upper limits set forth above makes it possible to maintain elasticity of the particulate polymer after immersion in electrolyte solution and to thereby improve adhesiveness of a functional layer after immersion in electrolyte solution.

### «Polymer A»

The polymer A is a component that forms an island phase of the particulate polymer. Although no specific limitations are placed on the chemical composition of the polymer A, it is preferable that the polymer A includes a (meth)acrylic acid ester monomer unit. When the polymer A includes a (meth)acrylic acid ester monomer unit, excessive lowering of the glass-transition temperature of the particulate polymer can be inhibited, and blocking of an obtained functional layer during storage can be inhibited. The polymer A may include other monomer units such as a cross-linkable monomer unit and an acidic group-containing monomer unit in addition to a (meth)acrylic acid ester monomer unit.

Examples of (meth)acrylic acid ester monomers that can be used to form a (meth)acrylic acid ester monomer unit include acrylic acid alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and monofunctional methacrylic acid alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate. Of these (meth)acrylic acid ester monomers, n-butyl acrylate, 2-ethylhexyl acrylate, and methyl methacrylate are preferable.

Note that one of these (meth)acrylic acid ester monomers may be used individually, or two or more of these (meth)acrylic acid ester monomers may be used in combination in a freely selected ratio.

The proportional content of (meth)acrylic acid ester monomer units in the polymer A when all repeating units included in the polymer A are taken to be 100 mass% is preferably 5 mass% or more, and more preferably 50 mass% or more, and is preferably 99.9 mass% or less. When the proportional content of (meth)acrylic acid ester monomer units in the polymer A is not less than any of the lower limits set forth above, process adhesiveness of an obtained functional layer can be even further improved. Moreover, when the proportional content of (meth)acrylic acid ester monomer units in the polymer A is not more than the upper limit set forth above, slurry stability can be increased.

Examples of monomers that can form a cross-linkable monomer unit include polyfunctional monomers having two or more groups that display polymerization reactivity. Examples of such polyfunctional monomers include divinyl compounds such as allyl methacrylate and divinylbenzene; di(meth)acrylic acid ester compounds such as diethylene glycol dimethacrylate, ethylene glycol dimethacrylate, diethylene glycol diacrylate, and 1,3-butylene glycol diacrylate; tri(meth)acrylic acid ester compounds such as trimethylolpropane trimethacrylate and trimethylolpropane triacrylate; and epoxy group-containing ethylenically unsaturated monomers such as allyl glycidyl ether and glycidyl methacrylate. One of these monomers may be used individually, or two or more of these monomers may be used in combination. Of these monomers, allyl methacrylate is preferable.

The proportional content of cross-linkable monomer units in the polymer A when all repeating units included in the polymer A are taken to be 100 mass% is preferably 0.05 mass% or more, and more preferably 0.5 mass% or more, and is preferably 7 mass% or less, more preferably 5 mass% or less, and even more preferably 3 mass% or less. When the proportional content of cross-linkable monomer units in the polymer A is not less than any of the lower limits set forth above, the particulate polymer can be provided with a good sea-island structure. Moreover, when the proportional content of cross-linkable monomer units in the polymer A is not more than any of the upper limits set forth above, adhesiveness of an obtained functional layer after immersion in electrolyte solution can be increased.

Examples of acidic group-containing monomers that can be used to form an acidic group-containing monomer unit include carboxy group-containing monomers, sulfo group-containing monomers, phosphate group-containing monomers, and hydroxy group-containing monomers. In particular, a carboxy group-containing monomer unit is preferable, and a (meth)acrylic acid monomer unit is more preferable. When the acidic group-containing monomer unit of the polymer A is a carboxy group-containing monomer unit, and in particular a (meth)acrylic acid monomer unit, a functional layer having even better process adhesiveness and blocking resistance can be formed.

Examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, 3-allyloxy-2-hydroxypropane sulfonic acid, p-styrene sulfonic acid, and salts thereof.

Note that in the present specification, "(meth)allyl" is used to indicate "allyl" and/or "methallyl", whereas "(meth)acryl" is used to indicate "acryl" and/or "methacryl".

Examples of phosphate group-containing monomers include 2-(meth)acryloyloxy ethyl phosphate, methyl-2-(meth)acryloyloxy ethyl phosphate, and ethyl-(meth)acryloyloxyethyl phosphate.

Note that in the present specification, "(meth)acryloyl" is used to indicate "acryloyl" and/or "methacryloyl".

Examples of hydroxy group-containing monomers include 2-hydroxyethyl acrylate, 2-hydroxypropyl acrylate, 2-hydroxyethyl methacrylate, and 2-hydroxypropyl methacrylate.

Note that one of these acidic group-containing monomers may be used individually, or two or more of these acidic group-containing monomers may be used in combination in a freely selected ratio.

Although no specific limitations are placed on the proportional content of acidic group-containing monomer units in the polymer A, the proportional content when all repeating units included in the polymer A are taken to be 100 mass% is preferably 0.1 mass% or more, and more preferably 0.2 mass% or more, and is preferably 5 mass% or less, more preferably 1 mass% or less, and even more preferably 0.5 mass% or less. When the proportional content of acidic group-containing monomer units in the polymer A is not less than any of the lower limits set forth above, slurry stability of the composition for a functional layer can be increased, and blocking resistance of an obtained functional layer can be even further increased. Moreover, when the proportional content of acidic group-containing monomer units in the polymer A is not more than any of the upper limits set forth above, stability during production of the particulate polymer can be increased.

Examples of other monomers that can be used to form other monomer units that can form the polymer A include aromatic vinyl monomers and the like. Examples of aromatic vinyl monomers include various monomers that are subsequently described as monomers that can be used to form an aromatic vinyl monomer unit that can be included in the polymer B.

Although no specific limitations are placed on the proportional content of other monomer units in the polymer A, the proportional content when all repeating units included in the polymer A are taken to be 100 mass% is preferably 10 mass% or less, and may be 0 mass% (i.e., the polymer A may be a polymer that does not include other monomer units).

### [Glass-transition temperature of polymer A]

The glass-transition temperature of the polymer A is preferably higher than 20°C, more preferably 25°C or higher, and even more preferably 30°C or higher, and is preferably 90°C or lower, more preferably 80°C or lower, and even more preferably 70°C or lower. When the glass-transition temperature of the polymer A is not lower than any of the lower limits set forth above, blocking resistance of an obtained functional layer can be increased. Moreover, when the glass-transition temperature of the polymer A is not higher than any of the upper limits set forth above, adhesiveness after immersion in electrolyte solution and process adhesiveness of an obtained functional layer can be even further increased.

### [Degree of swelling in electrolyte solution S^{A} of polymer A]

The degree of swelling in electrolyte solution S^{A} of the polymer A is preferably ×4.0 or more, more preferably ×6.0 or more, even more preferably ×7.0 or more, and further preferably ×8.0 or more, and is preferably ×20.0 or less, more preferably ×18.0 or less, and even more preferably ×16.0 or less. When the degree of swelling in electrolyte solution S^{A} of the polymer A is not less than any of the lower limits set forth above, swelling of the polymer A in electrolyte solution in a situation in which an obtained functional layer is immersed in electrolyte solution causes a swollen portion thereof to infiltrate in-between electrode active material and display a good anchoring effect, and, as a result, adhesive strength can be increased. Moreover, when the degree of swelling in electrolyte solution S^{A} of the polymer A is not more than any of the upper limits set forth above, resistance of an obtained functional layer in electrolyte solution decreases, and battery characteristics of a secondary battery including this functional layer can be enhanced. Furthermore, when the degree of swelling in electrolyte solution S^{A} of the polymer A is not more than any of the upper limits set forth above, excessive narrowing of voids in a functional layer due to excessive swelling of the polymer A in electrolyte solution can be inhibited, and, as a result, injectability of the functional layer can be increased.

### [Content ratio of polymer A based on contained mass of polymer B]

A content ratio of the polymer A based on contained mass of the polymer B is preferably 0.1 mass% or more, more preferably 0.3 mass% or more, and even more preferably 0.5 mass% or more, and is preferably 20 mass% or less, more preferably 10 mass% or less, and even more preferably 5 mass% or less. When the content ratio of the polymer A based on contained mass of the polymer B is within any of the ranges set forth above, it is possible to cause desired attributes that can be displayed by the polymer A and desired attributes that can be displayed by the polymer B to be displayed in an even better balance. Note that in a case in which the polymer A is a polymer that can display high adhesive capability when swollen in electrolyte solution, wet adhesiveness of an obtained functional layer can be increased through the content ratio of the polymer A being not less than any of the lower limits set forth above. Moreover, in a case in which the polymer A is a polymer that can display high adhesive capability when swollen in electrolyte solution, elasticity of the particulate polymer after immersion in the electrolyte solution can be maintained, thereby enabling improvement of adhesiveness of a functional layer after immersion in electrolyte solution, through the content ratio of the polymer A being not more than any of the upper limits set forth above.

### «Polymer B»

The polymer B is a component that forms a sea phase of the particulate polymer. No specific limitations are placed on the chemical composition of the polymer B so long as it is different from that of the polymer A. For example, the polymer B can include an aromatic vinyl monomer unit, a (meth)acrylic acid ester monomer unit, a cross-linkable monomer unit, and other monomer units besides these monomer units.

Examples of aromatic vinyl monomers that can be used to form an aromatic vinyl monomer unit include, but are not specifically limited to, styrene, α-methylstyrene, butoxystyrene, and vinylnaphthalene, of which, styrene is preferable. Note that one of these aromatic vinyl monomers may be used individually, or two or more of these aromatic vinyl monomers may be used in combination in a freely selected ratio.

The proportional content of aromatic vinyl monomer units in the polymer B when all repeating units included in the polymer B are taken to be 100 mass% is preferably 20 mass% or more, and is preferably 90 mass% or less, and more preferably 85 mass% or less. When the proportional content of aromatic vinyl monomer units in the polymer B is within any of the ranges set forth above, good close adherence between a functional layer and a substrate can be achieved.

Examples of monomers that can be used to form a (meth)acrylic acid ester monomer unit that can be included in the polymer B include the same monomers as listed in relation to the polymer A. Of these monomers, n-butyl acrylate, 2-ethylhexyl acrylate, and methyl methacrylate are preferable, and 2-ethylhexyl acrylate is more preferable.

The proportional content of (meth)acrylic acid ester monomer units in the polymer B when all repeating units included in the polymer B are taken to be 100 mass% is preferably 5 mass% or more, and more preferably 10 mass% or more, and is preferably 50 mass% or less, and more preferably 40 mass% or less. When the proportional content of (meth)acrylic acid ester monomer units in the polymer B is not less than any of the lower limits set forth above, process adhesiveness of an obtained functional layer can be even further improved. Moreover, when the proportional content of (meth)acrylic acid ester monomer units in the polymer B is not more than any of the upper limits set forth above, stability in a situation in which a slurry composition is produced can be increased.

Examples of monomers that can be used to form a cross-linkable monomer unit that can be included in the polymer B include the same monomers as listed in relation to the polymer A. Of these monomers, ethylene glycol dimethacrylate is preferable.

The proportional content of cross-linkable monomer units in the polymer B when all repeating units included in the polymer B are taken to be 100 mass% is preferably not less than 0.05 mass% and not more than 10 mass%. When the proportional content of cross-linkable monomer units in the polymer B is within any of the ranges set forth above, process adhesiveness of an obtained functional layer can be increased.

Note that the polymer B may include monomer units other than those described above (i.e., monomer units other than an aromatic vinyl monomer unit, a (meth)acrylic acid ester monomer unit, and a cross-linkable monomer unit). Examples of monomers that can be used to form such monomer units include acidic group-containing monomers.

Examples of acidic group-containing monomers that can be used to form an acidic group-containing monomer unit include, but are not specifically limited to, the acidic group-containing monomers that were previously described in relation to the polymer A.

Although no specific limitations are placed on the proportional content of monomer units other than those described above in the polymer B, the proportional content when all repeating units included in the polymer B are taken to be 100 mass% is preferably 10 mass% or less, and may be 0 mass% (i.e., the polymer B may be a polymer that does not include monomer units other than those described above).

### [Glass-transition temperature of polymer B]

The glass-transition temperature of the polymer B is preferably higher than 10°C, more preferably 20°C or higher, and even more preferably 30°C or higher, and is preferably 110°C or lower, more preferably 90°C or lower, and even more preferably 80°C or lower. When the glass-transition temperature of the polymer B is not lower than any of the lower limits set forth above, blocking resistance of an obtained functional layer can be increased. Moreover, when the glass-transition temperature of the polymer B is not higher than any of the upper limits set forth above, process adhesiveness of an obtained functional layer can be even further increased.

### [Degree of swelling in electrolyte solution S^{B} of polymer B]

The degree of swelling in electrolyte solution S^{B} of the polymer B is preferably × 1.0 or more, more preferably ×1.2 or more, and even more preferably ×1.3 or more, and is preferably ×8.0 or less, more preferably ×6.0 or less, and even more preferably ×4.0 or less. When the degree of swelling in electrolyte solution S^{B} of the polymer B is not less than any of the lower limits set forth above, the particulate polymer swells to a suitable degree in electrolyte solution, and adhesiveness displayed by a functional layer after immersion in electrolyte solution can be increased. Moreover, when the degree of swelling in electrolyte solution S^{B} of the polymer B is not more than any of the upper limits set forth above, resistance of an obtained functional layer in electrolyte solution decreases, and battery characteristics of a secondary battery including this functional layer can be enhanced. Furthermore, when the degree of swelling in electrolyte solution S^{B} of the polymer B is not more than any of the upper limits set forth above, excessive narrowing of voids in a functional layer due to excessive swelling of the polymer B in electrolyte solution can be inhibited, and, as a result, injectability of the functional layer can be increased, and rate characteristics of an obtained secondary battery can be enhanced.

### <<Degree of swelling ratio of polymer A and polymer B»

The degree of swelling in electrolyte solution S^{A} of the polymer A described above is preferably at least 1.2 times, more preferably at least 1.3 times, and even more preferably at least 1.5 times the degree of swelling in electrolyte solution S^{B} of the polymer B. Note that the degree of swelling in electrolyte solution S^{A} of the polymer A can be 20 times or less the degree of swelling in electrolyte solution S^{B} of the polymer B, but is not specifically limited thereto. When the value of "degree of swelling in electrolyte solution S^{A} of polymer A/degree of swelling in electrolyte solution S^{B} of polymer B" is not less than any of the lower limits set forth above, adhesive strength increases because a portion of the particulate polymer corresponding to the polymer B that constitutes more than 50 mass% of mass of the particulate polymer maintains elastic strength even in electrolyte solution. Moreover, a portion where the polymer A is present has a degree of swelling in electrolyte solution that is relatively sufficiently high compared to the polymer B and thus can infiltrate well in-between electrode active material, display an anchoring effect, and increase process adhesiveness.

### «Volume-average particle diameter of particulate polymer»

The volume-average particle diameter of the particulate polymer may be 0.8 µm or more, is preferably 1.0 µm or more, more preferably 2.5 µm or more, and even more preferably 5.0 µm or more, and is preferably 10.0 µm or less, more preferably 9.0 µm or less, and even more preferably 8.0 µm or less. When the volume-average particle diameter of the particulate polymer is not less than any of the lower limits set forth above, the particulate polymer can be caused to partially protrude from the surface of a functional layer. In a case in which the particulate polymer is a polymer that can display adhesive capability as previously described, this is thought to enable increased process adhesiveness and adhesiveness after immersion in electrolyte solution through the functional layer. Moreover, cycle characteristics of an obtained secondary battery can be enhanced as a result of high adhesiveness being displayed. Moreover, it is thought that when the volume-average particle diameter of the particulate polymer is not more than any of the upper limits set forth above, detachment of the particulate polymer from a functional layer during formation of the functional layer can be inhibited, and uniformity of the obtained functional layer can be increased.

Note that the volume-average particle diameter of the particulate polymer can be adjusted through the type and amount of a metal hydroxide used in production of the particulate polymer, for example.

### <<Amount of particulate polymer>>

The amount of the particulate polymer in the composition for a functional layer in terms of a ratio of heat-resistant fine particles:particulate polymer, by volume, is preferably 75:25 to 60:40, and more preferably 70:30 to 65:35.

### <<Production of particulate polymer>>

The particulate polymer can be produced through polymerization of a monomer composition that contains the monomers set forth above, carried out in an aqueous solvent such as water, for example. The proportion constituted by each monomer in the monomer composition is normally the same as the proportion constituted by each monomer unit in the particulate polymer.

The polymerization method may be a method such as a suspension polymerization method, an emulsion polymerization and aggregation method, a dissolution and suspension method, or a pulverization method, and is preferably a suspension polymerization method, a dissolution and suspension method, or a pulverization method. In particular, a suspension polymerization method is more preferable from a viewpoint of efficiently producing a particulate polymer having the desired structure. Moreover, a reaction such as radical polymerization or living radical polymerization can be adopted as the polymerization reaction.

### [Other compounding agents]

Other compounding agents such as chain transfer agents, polymerization modifiers, polymerization reaction retardants, reactive fluidizers, fillers, flame retardants, antioxidants, and colorants can be compounded in any amount in the monomer composition that is used in production of the particulate polymer.

The following describes, as one example, a production method in which the particulate polymer is produced by suspension polymerization.

### [Production of particulate polymer by suspension polymerization]

### (1) Preparation of polymer A and production of monomer composition of polymer B

First, the polymer A is prepared by polymerization according to an established method. The volume-average particle diameter of the polymer A at this time is preferably 0.01 µm or more, more preferably 0.02 µm or more, and even more preferably 0.03 µm or more, and is preferably 0.5 µm or less, more preferably 0.3 µm or less, and even more preferably 0.2 µm or less. When the volume-average particle diameter of the polymer A is not less than any of the lower limits set forth above, the polymer A can effectively act as an anchor when displaying adhesive capability in an obtained functional layer in a case in which the polymer A is a polymer that can display high adhesive capability when swollen in electrolyte solution, and this can improve adhesiveness of the functional layer after immersion in electrolyte solution. Moreover, when the volume-average particle diameter of the polymer A is not more than any of the upper limits set forth above, elasticity of the particulate polymer can be maintained after immersion in electrolyte solution, and this can improve adhesiveness of a functional layer after immersion in electrolyte solution. Note that the volume-average particle diameter of the polymer A can be measured by a method described in the EXAMPLES section. Moreover, the volume-average particle diameter of the polymer A can be controlled according to the amount of polymerization initiator that is compounded in polymerization of the polymer A, for example.

In addition, a monomer composition (B) having a chemical composition corresponding to the chemical composition of the polymer B is prepared. In preparation of the monomer composition (B), various monomers are compounded in accordance with the chemical composition of the polymer B, and other compounding agents that are added as necessary are also mixed therewith.

### (2) Formation of droplets

Next, a colloidal dispersion liquid that contains a dispersion stabilizer is produced, the polymer A and the monomer composition (B) obtained as described above are loaded into this colloidal dispersion liquid, a polymerization initiator is added, a mixture is obtained, and mixed droplets containing the polymer A and the monomer composition (B) are formed in the colloidal dispersion liquid containing the dispersion stabilizer. No specific limitations are placed on the method by which mixed droplets are formed. For example, a method in which shear stirring is performed using a disperser such as an emulsifying/dispersing device may be adopted.

The polymerization initiator that is used may be an oil-soluble polymerization initiator such as t-butyl peroxy-2-ethylhexanoate or azobisisobutyronitrile, for example. The dispersion stabilizer may be sodium dodecylbenzenesulfonate, a metal oxide such as magnesium hydroxide, or the like.

### (3) Polymerization

After formation of mixed droplets, water containing the formed mixed droplets is heated to initiate polymerization. The polymerization is continued until a sufficiently high polymerization conversion rate is reached so as to form a particulate polymer in the water. The reaction temperature of the polymerization is preferably not lower than 50°C and not higher than 95°C. Moreover, the reaction time of the polymerization is preferably not less than 1 hour and not more than 10 hours, and is preferably 8 hours or less, and more preferably 6 hours or less.

### (4) Washing, filtration, dehydration, and drying process

After the polymerization, the particulate polymer can be obtained by performing washing, filtration, and drying of the water containing the particulate polymer by standard methods.

### <Binder>

The binder binds the heat-resistant fine particles to one another in a functional layer. The binder may be a known polymer that is used as a binder and may, for example, be a conjugated diene polymer, an acrylic polymer or modified product thereof (for example, a sulfonic acid modified product or a carboxylic acid modified product of an acrylic polymer), polyvinylidene fluoride (PVDF), polyvinyl alcohol (PVOH), a copolymer that includes an optionally substituted acrylamide monomer unit, or a copolymer that includes a fluorine-containing monomer unit. One binder may be used individually, or two or more binders may be used in combination. The binder is preferably a water-insoluble polymer such as a conjugated diene polymer, an acrylic polymer, or polyvinylidene fluoride (PVDF) that can be dispersed in a dispersion medium such as water, more preferably a conjugated diene polymer or an acrylic polymer, and even more preferably an acrylic polymer that includes a (meth)acrylic acid ester monomer unit. When the binder is an acrylic polymer that includes a (meth)acrylic acid ester monomer unit, process adhesiveness of a functional layer can be increased, and electrochemical characteristics of an obtained electrochemical device can be enhanced. Note that the use of a conjugated diene polymer is excluded in a case in which the composition for a functional layer is to be used in an application where it is applied onto a positive electrode.

Also note that when a polymer is said to be "water-insoluble" in the present disclosure, this means that when 0.5 g of the polymer is dissolved in 100 g of water at a temperature of 25°C, insoluble content is 90 mass% or more.

One of these binders may be used individually, or two or more of these binders may be used in combination in a freely selected ratio.

The term "conjugated diene polymer" refers to a polymer that includes a conjugated diene monomer unit. Specific examples of the conjugated diene polymer include, but are not specifically limited to, copolymers that include an aromatic vinyl monomer unit and an aliphatic conjugated diene monomer unit such as styrene-butadiene copolymer (SBR), butadiene rubber (BR), acrylic rubber (NBR) (copolymer including an acrylonitrile unit and a butadiene unit), and hydrogenated products thereof.

The acrylic polymer that can preferably be used as the binder may be a polymer that includes a cross-linkable monomer unit, a (meth)acrylic acid ester monomer unit, and an acidic group-containing monomer unit such as previously described, for example, but is not specifically limited thereto.

The proportion constituted by (meth)acrylic acid ester monomer units in the acrylic polymer is preferably 50 mass% or more, more preferably 55 mass% or more, and even more preferably 58 mass% or more, and is preferably 98 mass% or less, more preferably 97 mass% or less, and even more preferably 96 mass% or less. By setting the proportion constituted by (meth)acrylic acid ester monomer units as not less than the lower limit of any of the ranges set forth above, process adhesiveness of a functional layer can be increased. Moreover, by setting this proportion as not more than any of the upper limits, electrochemical characteristics of an electrochemical device that includes a functional layer can be further enhanced.

The proportion constituted by cross-linkable monomer units in the acrylic polymer is preferably 0.1 mass% or more, and more preferably 1.0 mass% or more, and is preferably 3.0 mass% or less, and more preferably 2.5 mass% or less. By setting the proportion constituted by cross-linkable monomer units as not less than any of the lower limits set forth above, electrochemical characteristics of an electrochemical device that includes a functional layer can be further enhanced. Moreover, by setting the proportion constituted by cross-linkable monomer units as not more than any of the upper limits set forth above, adhesiveness of a functional layer can be increased.

The proportion constituted by acid group-containing monomer units in the acrylic polymer is preferably 0.1 mass% or more, more preferably 0.3 mass% or more, and even more preferably 0.5 mass% or more, and is preferably 20 mass% or less, more preferably 10 mass% or less, and even more preferably 5 mass% or less. By setting the proportion constituted by acid group-containing monomer units as not less than any of the lower limits set forth above, dispersibility of the binder in the composition for a functional layer and in a functional layer can be increased, and electrochemical characteristics of an electrochemical device that includes a functional layer can be sufficiently enhanced. Moreover, by setting the proportion constituted by acid group-containing monomer units as not more than any of the upper limits set forth above, residual water content in a functional layer can be reduced, and electrochemical characteristics of an electrochemical device can be sufficiently enhanced.

Note that the acrylic polymer may also include other monomer units.

### «Glass-transition temperature of binder»

The glass-transition temperature (Tg) of the binder is preferably -100°C or higher, more preferably -90°C or higher, and even more preferably -80°C or higher, and is preferably 30°C or lower, more preferably 20°C or lower, and even more preferably 15°C or lower. When the glass-transition temperature of the binder is not lower than any of the lower limits set forth above, adhesiveness and strength of a functional layer can be increased. On the other hand, when the glass-transition temperature of the binder is not higher than any of the upper limits set forth above, flexibility of a functional layer can be increased.

### [Content of binder]

The content of the binder is preferably 0.1 parts by mass or more, more preferably 0.2 parts by mass or more, and even more preferably 0.5 parts by mass or more per 100 parts by mass of the heat-resistant fine particles, and is preferably 25 parts by mass or less, more preferably 15 parts by mass or less, and even more preferably 10 parts by mass or less per 100 parts by mass of the heat-resistant fine particles. When the content of the binder is not less than any of the lower limits set forth above, detachment of the particulate polymer from a functional layer can be sufficiently prevented, and adhesiveness of a functional layer can be sufficiently increased. On the other hand, when the content of the binder is not more than any of the upper limits set forth above, reduction of ion conductivity of a functional layer can be inhibited, and deterioration of rate characteristics of an electrochemical device can be inhibited.

The binder can be produced through polymerization of a monomer composition containing the monomers described above, carried out in an aqueous solvent such as water, for example, but is not specifically limited to being produced in this manner. The proportion constituted by each monomer in the monomer composition is normally the same as the proportion constituted by each monomer unit in the binder.

The polymerization method and the polymerization reaction are not specifically limited and may, for example, be any of the polymerization methods and polymerization reactions that were given as examples for the polymerization method of the previously described particulate polymer.

Although the form of the binder may be a particulate form or may be a non-particulate form, it is preferable that the binder has a particulate form from a viewpoint that detachment of components contained in a functional layer can be inhibited well.

In a case in which the binder has a particulate form, the volume-average particle diameter of the binder can be not less than 0.1 µm and not more than 0.5 µm, for example. When the volume-average particle diameter of the binder is within this range, heat shrinkage resistance and process adhesiveness of an obtained functional layer can be even further increased, and output characteristics of an obtained secondary battery can be even further enhanced.

### <Heat-resistant fine particles>

The heat-resistant fine particles that are optionally contained in the composition for a functional layer are not specifically limited and may be fine particles formed of an inorganic material (i.e., inorganic fine particles) or fine particles formed of an organic material (i.e., organic fine particles) that are electrochemically stable and are stably present in the environment of use of an electrochemical device. In a case in which the composition for a functional layer contains heat-resistant fine particles, it is possible to impart heat resistance to a functional layer obtained using the composition for a functional layer.

Note that inorganic fine particles may be used by themselves or organic fine particles may be used by themselves as the heat-resistant fine particles, or inorganic fine particles and organic fine particles may be used in combination as the heat-resistant fine particles.

### <<Inorganic fine particles>>

Examples of inorganic fine particles include particles of inorganic oxides such as aluminum oxide (alumina, Al₂O₃), hydrous aluminum oxide (boehmite, AlOOH), gibbsite (Al(OH)₃), silicon oxide, magnesium oxide (magnesia), magnesium hydroxide, calcium oxide, titanium oxide (titania), barium titanate (BaTiO₃), ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clay such as talc and montmorillonite. These particles may be subjected to element substitution, surface treatment, solid solution treatment, or the like as necessary. Note that one type of inorganic fine particles may be used individually, or two or more types of inorganic fine particles may be used in combination.

### <<Organic fine particles>>

The organic fine particles are fine particles formed of a polymer that does not display adhesiveness and differ from the specific particulate polymer and the binder that were previously described.

Examples of organic fine particles include particles of various cross-linked polymers such as cross-linked polymethyl methacrylate, cross-linked polystyrene, cross-linked polydivinylbenzene, cross-linked styrenedivinylbenzene copolymer, polystyrene, polyimide, polyamide, polyamide imide, melamine resin, phenolic resin, and benzoguanamine-formaldehyde condensate; particles of heat-resistant polymers such as polysulfone, polyacrylonitrile, polyaramid, polyacetal, and thermoplastic polyimide; and modified products and derivatives of any of the preceding examples. Note that one type of organic fine particles may be used individually, or two or more types of organic fine particles may be used in combination.

Also note that the organic fine particles are formed of a polymer that does not display adhesiveness as previously described. Specifically, the polymer forming the organic fine particles preferably has a glass-transition temperature of 150°C or higher.

Of the heat-resistant fine particles described above, inorganic fine particles are preferable from a viewpoint of further improving heat resistance of an obtained functional layer, and particles formed of alumina (alumina particles), particles formed of boehmite (boehmite particles), particles formed of barium sulfate (barium sulfate particles), and particles formed of magnesium hydroxide (magnesium hydroxide particles) are even more preferable.

### <<Properties of heat-resistant fine particles>>

The volume-average particle diameter of the heat-resistant fine particles is preferably 0.1 µm or more, more preferably 0.2 µm or more, and even more preferably 0.3 µm or more, and is preferably 1.0 µm or less, more preferably 0.9 µm or less, and even more preferably 0.8 µm or less. When the volume-average particle diameter of the heat-resistant fine particles is 0.1 µm or more, it is possible to inhibit reduction of ion conductivity of a functional layer caused by excessively dense packing of the heat-resistant fine particles in the functional layer and to cause an electrochemical device to display excellent rate characteristics. On the other hand, when the volume-average particle diameter of the heat-resistant fine particles is 1.5 µm or less, it is possible to cause a device member that is formed of a laminate including a functional layer to sufficiently display excellent heat resistance even in a situation in which the thickness of the functional layer is reduced. Consequently, heat resistance of the device member can be sufficiently ensured while also increasing the capacity of an electrochemical device.

### <Other components>

The composition for a functional layer may contain any other components besides the components described above. These other components are not specifically limited so long as they do not affect electrochemical reactions in an electrochemical device, and examples thereof include known additives such as dispersants, viscosity modifiers, and wetting agents. One of these other components may be used individually, or two or more of these other components may be used in combination.

### <Production method of composition for electrochemical device functional layer>

No specific limitations are placed on the method by which the composition for a functional layer is produced. For example, the composition for a functional layer can be produced by mixing the above-described particulate polymer, binder, optional heat-resistant fine particles, water as a dispersion medium, and other components that are used as necessary. Note that in a case in which the particulate polymer or binder is produced through polymerization of a monomer composition in an aqueous solvent, the particulate polymer or binder may be mixed with other components while still in the form of a water dispersion. Moreover, in a case in which the particulate polymer or binder is mixed in the form of a water dispersion, water in that water dispersion may be used as the dispersion medium.

Although no specific limitations are placed on the mixing method of the above-described components, the mixing is preferably performed using a disperser as a mixing device in order to efficiently disperse the components. The disperser is preferably a device that can uniformly disperse and mix the components. Examples of dispersers that can be used include a ball mill, a sand mill, a pigment disperser, a grinding machine, an ultrasonic disperser, a homogenizer, and a planetary mixer.

The specific particulate polymer described above is preferably premixed with a dispersant such as a nonionic surfactant, an anionic surfactant, a cationic surfactant, or an amphoteric surfactant prior to being mixed with the binder and the optional heat-resistant fine particles. Of these examples, anionic surfactants can suitably be used as the dispersant. Specific examples of anionic surfactants include sulfuric acid ester salts of higher alcohols such as sodium lauryl sulfate, ammonium lauryl sulfate, sodium dodecyl sulfate, ammonium dodecyl sulfate, sodium octyl sulfate, sodium decyl sulfate, sodium tetradecyl sulfate, sodium hexadecyl sulfate, and sodium octadecyl sulfate; alkylbenzene sulfonic acid salts such as sodium dodecylbenzenesulfonate, sodium laurylbenzenesulfonate, and sodium hexadecylbenzenesulfonate; and aliphatic sulfonic acid salts such as sodium laurylsulfonate, sodium dodecylsulfonate, and sodium tetradecylsulfonate. The amount of the dispersant relative to 100 parts by mass of the particulate polymer is preferably 0.01 parts by mass or more, more preferably 0.05 parts by mass or more, and even more preferably 0.1 parts by mass or more, and is preferably 0.5 parts by mass or less, more preferably 0.4 parts by mass or less, and even more preferably 0.3 parts by mass or less. When the amount of the dispersant is not less than any of the lower limits set forth above, uneven distribution of the particulate polymer in a functional layer can be inhibited, and cycle characteristics of an obtained electrochemical device can be enhanced. When the amount of the dispersant is not more than any of the upper limits set forth above, it is possible to suppress an increase of internal resistance and inhibit deterioration of rate characteristics of an obtained electrochemical device.

### (Functional layer for electrochemical device)

The functional layer for an electrochemical device can be formed on a suitable substrate, for example, using the composition for a functional layer set forth above. In other words, the functional layer for an electrochemical device can be an applied and shaped product of the composition for a functional layer set forth above. The functional layer contains at least the above-described particulate polymer and binder and also other components such as heat-resistant fine particles that are used as necessary. Note that components contained in the functional layer are components that were contained in the composition for a functional layer set forth above, and the preferred ratio of these components is also the same as the preferred ratio of the components in the composition for a functional layer. Also note that the functional layer can be formed according to a method described in the "Laminate for electrochemical device" section, but is not specifically limited thereto.

The functional layer that is formed using the composition for a functional layer normally has a plurality of heat-resistant fine particles stacked in a thickness direction of the functional layer. A layer (hereinafter, also referred to as a "heat-resistant fine particle layer") is formed as a result of this stacking of a plurality of heat-resistant fine particles in the thickness direction of the functional layer. The functional layer has a structure in which the previously described particulate polymer is partially embedded in the heat-resistant fine particle layer.

The thickness of the layer resulting from stacking of heat-resistant fine particles in the thickness direction of the functional layer is preferably 0.5 µm or more, more preferably 0.8 µm or more, and even more preferably 1.0 µm or more, and is preferably 6.0 µm or less, more preferably 5.0 µm or less, and even more preferably 3.5 µm or less. When the thickness of the heat-resistant fine particle layer is not less than any of the lower limits set forth above, the functional layer has extremely good heat resistance. On the other hand, when the thickness of the heat-resistant fine particle layer is not more than any of the upper limits set forth above, ion diffusivity of the functional layer can be ensured, and rate characteristics of an electrochemical device can be further enhanced.

### [Relationship between thickness of heat-resistant fine particle layer and volume-average particle diameter of particulate polymer]

With regards to a relationship between the thickness of the heat-resistant fine particle layer and the volume-average particle diameter of the particulate polymer, it is preferable that the volume-average particle diameter of the particulate polymer is larger than the thickness of the heat-resistant fine particle layer. Note that a ratio of the volume-average particle diameter of the particulate polymer relative to the thickness of the heat-resistant fine particle layer (volume-average particle diameter of particulate polymer/thickness of heat-resistant fine particle layer) may be 0.4 or more, is preferably more than 1.0, more preferably 1.5 or more, and particularly preferably 2.5 or more, and is preferably 10.0 or less, more preferably 9.0 or less, and even more preferably 8.0 or less. When the volume-average particle diameter of the particulate polymer is larger than the thickness of the heat-resistant fine particle layer, it is easier for the particulate polymer to protrude relative to the surfaces of the heat-resistant fine particles at a thickness direction surface of the functional layer, and thus good adhesiveness can be displayed. Moreover, when the ratio of the volume-average particle diameter of the particulate polymer relative to the thickness of the heat-resistant fine particle layer is not more than any of the upper limits set forth above, the number of adhesion points of the particulate polymer increases, and thus good adhesiveness can be displayed.

### (Laminate for electrochemical device)

The laminate for an electrochemical device includes a substrate and a functional layer for an electrochemical device formed on the substrate using the composition for a functional layer set forth above. The functional layer for an electrochemical device contains at least the above-described particulate polymer and binder, the optional heat-resistant fine particles, and other components that are used as necessary. Note that components contained in the functional layer are components that were contained in the composition for a functional layer set forth above, and the preferred ratio of these components is also the same as the preferred ratio of the components in the composition for a functional layer.

### <Substrate>

The substrate may be selected as appropriate depending on the type of electrochemical device member for which the presently disclosed laminate is to be used. For example, in a case in which the presently disclosed laminate is used as a separator, a separator substrate is used as the substrate. Moreover, in a case in which the presently disclosed laminate is used as an electrode, for example, an electrode substrate is used as the substrate.

### <<Separator substrate>>

The separator substrate is not specifically limited and may be a known separator substrate such as an organic separator substrate. The organic separator substrate is a porous member that is formed of an organic material. The organic separator substrate may, for example, be a microporous membrane or non-woven fabric containing a polyolefinic resin such as polyethylene, polypropylene, polybutene, or polyvinyl chloride, an aromatic polyamide resin, or the like.

Of these separator substrates, a microporous membrane formed of a polyolefinic resin is preferable from a viewpoint that this makes it possible to increase the ratio of electrode active material in an electrochemical device and to increase the volumetric capacity of the electrochemical device.

Although the separator substrate may be of any thickness, the thickness thereof is preferably not less than 5 µm and not more than 30 µm, more preferably not less than 5 µm and not more than 20 µm, and even more preferably not less than 5 µm and not more than 18 µm.

### «Electrode substrate»

The electrode substrate (positive electrode substrate or negative electrode substrate) is not specifically limited and may be an electrode substrate obtained by forming an electrode mixed material layer on a current collector.

The current collector, an electrode active material (positive electrode active material or negative electrode active material) and a binder for an electrode mixed material layer (binder for a positive electrode mixed material layer or binder for a negative electrode mixed material layer) in the electrode mixed material layer, and the method by which the electrode mixed material layer is formed on the current collector may be known examples thereof such as those described in JP2013-145763A, for example.

### <Production method of laminate>

No specific limitations are placed on the method by which the presently disclosed laminate is produced. For example, a method in which a functional layer is formed on a releasable sheet and then this functional layer is transferred onto the substrate may be adopted. However, from a viewpoint of eliminating the need for a transfer operation and increasing production efficiency, the laminate is preferably produced through a step of supplying the composition for a functional layer onto the substrate (supply step) and a step of drying the composition for a functional layer that has been supplied onto the substrate (drying step).

### «Supply step»

In the supply step, the presently disclosed composition for a functional layer set forth above is supplied onto the substrate so as to form a coating film of the composition for a functional layer on the substrate. The method by which the composition for a functional layer is supplied onto the substrate is not specifically limited and may be by applying the composition for a functional layer onto the surface of the substrate or by immersing the substrate in the composition for a functional layer. Application of the composition for a functional layer onto the surface of the substrate is preferable because this facilitates control of thickness of the produced functional layer.

Examples of methods by which the composition for a functional layer may be applied onto the surface of the substrate include, but are not specifically limited to, doctor blading, reverse roll coating, direct roll coating, gravure coating, bar coating, extrusion coating, and brush coating.

Note that in the supply step, a coating film of the composition for a functional layer may be formed at just one side of the substrate or coating films of the composition for a functional layer may be formed at both sides of the substrate.

### <<Drying step>>

In the drying step, the coating film of the composition for a functional layer that has been formed on the substrate in the supply step is dried so as to remove the dispersion medium and form a functional layer.

The coating film of the composition for a functional layer may be dried by any commonly known method without any specific limitations. Examples of drying methods that may be used include drying by warm, hot, or low-humidity air; drying in a vacuum; and drying by irradiation with infrared light, an electron beam, or the like. Although no specific limitations are placed on the drying conditions, the drying temperature is preferably 50°C to 150°C, and the drying time is preferably 1 minute to 30 minutes.

Note that in production of the presently disclosed laminate, the supply step and the drying step may be performed with respect to one side of the substrate so as to form a functional layer, and then the supply step and the drying step may be further performed with respect to the other side of the substrate so as to form a functional layer.

### (Electrochemical device)

The presently disclosed electrochemical device includes electrodes and a separator, and a feature thereof is that it includes the presently disclosed laminate set forth above as either or both of an electrode and a separator. The presently disclosed electrochemical device has excellent electrochemical characteristics as a result of the presently disclosed laminate set forth above being used as at least one device member among an electrode and a separator.

The presently disclosed electrochemical device may be, but is not specifically limited to, a lithium ion secondary battery, an electric double-layer capacitor, or a lithium ion capacitor, for example, and is preferably a lithium ion secondary battery.

Although the following description gives a lithium ion secondary battery as one example of the presently disclosed electrochemical device and describes a case in which the presently disclosed laminate set forth above is used as a separator of the lithium ion secondary battery, the presently disclosed electrochemical device is not limited to the following example.

### <Positive electrode and negative electrode>

An electrode that is formed of a known electrode substrate (positive electrode substrate or negative electrode substrate) such as previously described in the "Substrate" section can be used as a positive electrode or negative electrode.

### <Electrolyte solution>

An organic electrolyte solution obtained by dissolving a supporting electrolyte in an organic solvent is normally used as an electrolyte solution. The supporting electrolyte may, for example, be a lithium salt in the case of a lithium ion secondary battery. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. In particular, LiPF₆, LiClO₄, and CF₃SO₃Li are preferable because they readily dissolve in solvents and exhibit a high degree of dissociation. Note that one electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as γ-butyrolactone and methyl formate; ethers such as 1,2-dimethoxyethane and tetrahydrofuran; and sulfur-containing compounds such as sulfolane and dimethyl sulfoxide.

Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

### <Production method of electrochemical device>

No specific limitations are placed on the method by which the presently disclosed electrochemical device is produced. For example, the lithium ion secondary battery described above as one example of the presently disclosed electrochemical device can be produced by stacking the positive electrode and the negative electrode with the separator in-between, performing rolling, folding, or the like of the resultant laminate, as necessary, to place the laminate in a battery container, injecting the electrolyte solution into the battery container, and sealing the battery container. Note that at least one device member among the positive electrode, the negative electrode, and the separator is the presently disclosed laminate. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer.

In the examples and comparative examples, measurements and evaluations of various attributes were performed as follows.

### <Glass-transition temperature>

A particulate polymer (polymer A and polymer B) and a binder produced in each example or comparative example were each used as a measurement sample. The measurement sample was weighed into an aluminum pan in an amount of 10 mg and was then measured by a differential scanning calorimeter (EXSTAR DSC6220 produced by SII NanoTechnology Inc.) under conditions prescribed in JIS Z 8703 with a measurement temperature range of -100°C to 500°C and a heating rate of 10°C/min, and with an empty aluminum pan as a reference, so as to obtain a differential scanning calorimetry (DSC) curve. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

Note that measurement samples were produced as described below for a particulate polymer having a sea-island structure (Examples 1 to 12) or a multi-layer structure (Comparative Example 2). Water dispersions containing polymers serving as measurement samples were produced under the same polymerization conditions as in formation of each phase or each layer using the monomers, various additives, and so forth used in formation of each phase or each layer in formation of the sea-island structure (heterophase structure) or multi-layer structure. The produced water dispersions were each dried to obtain a measurement sample.

### <Degree of swelling in electrolyte solution S^{A} and S^{B}>

Measurement samples obtained in the same way as in preparation of glass-transition temperature measurement samples were each dispersed in deionized water to obtain a water dispersion of the measurement sample, and then this water dispersion was loaded into a petri dish made of polytetrafluoroethylene. The water dispersion in the petri dish was dried at a temperature of 25°C for 48 hours to obtain a powdered sample. Approximately 0.2 g of the sample was pressed at a temperature of 200°C and a pressure of 5 MPa for 2 minutes to obtain a test specimen. The weight of the test specimen was measured and was taken to be W0.

Next, the test specimen was immersed in 60°C electrolyte solution (solvent: ethylene carbonate/diethyl carbonate/vinylene carbonate (volume ratio) = 68.5/30/1.5; electrolyte: LiPF₆ of 1 mol in concentration) for 72 hours.

After immersion, the test specimen was removed from the electrolyte solution, and electrolyte solution on the surface of the test specimen was wiped off. The weight of the test specimen after immersion was measured and was taken to be W1. The measured weights W0 and W1 were used to calculate the degree of swelling in electrolyte solution S^{A} or S^{B} (×) by a formula: S = (W1/W0).

### <Volume-average particle diameter of binder and polymer A>

The volume-average particle diameter of each binder or polymer A produced in the examples was measured by laser diffraction. Specifically, a water dispersion (adjusted to solid content concentration of 0.1 mass%) containing a produced binder or a polymer A produced as a measurement sample in the same way as in measurement of glass-transition temperature was used as a sample. Moreover, in a particle diameter distribution (by volume) measured using a laser diffraction particle size analyzer (LS-230 produced by Beckman Coulter, Inc.), the particle diameter D50 at which cumulative volume calculated from a small diameter end of the distribution reached 50% was taken to be the volume-average particle diameter.

### <Volume-average particle diameter of particulate polymer>

A particulate polymer produced in each example or comparative example was used as a measurement sample. The measurement sample was weighed out in an amount equivalent to 0.1 g, was taken into a beaker, and 0.1 mL of alkylbenzene sulfonic acid aqueous solution (DRIWEL produced by FUJIFILM Corporation) was added thereto as a dispersant. In addition, 10 mL to 30 mL of a diluent (ISOTON II produced by Beckman Coulter, Inc.) was added into the beaker, and 3 minutes of dispersing was performed using a 20 W (Watt) ultrasonic disperser. Thereafter, the volume-average particle diameter (Dv) of the measurement sample was measured using a particle size analyzer (Multisizer produced by Beckman Coulter, Inc.) under conditions of an aperture diameter of 20 µm, a medium of ISOTON II, and a measured particle count of 100,000.

### <Volume-average particle diameter of heat-resistant fine particles>

In a particle diameter distribution (by volume) measured by laser diffraction, the particle diameter (D50) at which cumulative volume calculated from a small diameter end of the distribution reached 50% was taken to be the volume-average particle diameter of heat-resistant fine particles.

### <Thickness of heat-resistant fine particle layer>

A cross-section of a functional layer-equipped separator was observed using a field emission scanning electron microscope (FE-SEM), and the thickness of a heat-resistant fine particle layer was calculated from an obtained SEM image. Note that the thickness of the heat-resistant fine particle layer was taken to be the distance from the surface of a separator substrate at which the functional layer was formed to a heat-resistant fine particle furthest separated therefrom in a perpendicular direction.

### <Ratio of volume-average particle diameter D50 of particulate polymer and thickness T of heat-resistant fine particle layer in functional layer>

A ratio of the volume-average particle diameter of a particulate polymer and the thickness of a heat-resistant fine particle layer in a functional layer (volume-average particle diameter of particulate polymer/thickness of heat-resistant fine particle layer) was determined based on the volume-average particle diameter of the particulate polymer and the thickness of the heat-resistant fine particle layer in the functional layer that were determined as described above.

### <Volume ratio of heat-resistant fine particles and particulate polymer>

The volume ratio of heat-resistant fine particles and a particulate polymer (heat-resistant fine particles/particulate polymer) was determined from charged amounts of the heat-resistant fine particles (alumina/organic fine particles) and the particulate polymer in production of a slurry composition. Note that the density of alumina was taken to be 4 g/cm³ in calculation. Moreover, the density of organic fine particles used in Example 12 was taken to be 1 g/cm³ in calculation.

### <Observation of particulate polymer structure and measurement of number of island phases per unit area of 1 µm² in particulate polymer cross-section>

A particulate polymer produced in each example or comparative example was dispersed in epoxy resin, curing was performed, and then cooling was performed to a temperature of -80°C. A slice was prepared through sectioning using a microtome. The slice was stained for approximately 5 minutes using ruthenium tetroxide aqueous solution of 0.5% in concentration and was then observed using a TEM (transmission electron microscope) in order to observe the structure of the particulate polymer. In a case in which, as a result of this observation, 20 particles of the particulate polymer taken as observation subjects in accordance with criteria described below were found to have a structure in which island-like isolated separated phases were scattered in a matrix formed of a continuous phase, a judgment of "Yes" was made with regards to the particulate polymer having a sea-island structure. Particulate polymers according to the examples were all confirmed to have a sea-island structure, whereas particulate polymers according to Comparative Examples 1 and 3 did not have phase separation, and a particulate polymer according to Comparative Example 2 was confirmed to include a core layer and a shell layer at least partially encircling this core layer.

Note that the concentration of the particulate polymer in the sample that was dispersed in epoxy resin was adjusted such that 5 to 10 stained particle cross-sections fitted into an image for a range of 28 µm × 35 µm. In an image for a range 28 µm × 35 µm, particles of the particulate polymer for which the entire image of the particulate polymer cross-section was not captured in the image or for which the size of the particulate polymer cross-section (circumscribed circle diameter of the cross-section) was not within a range of 0.6 times to 1.2 times the volume-average particulate polymer of the particulate polymer were excluded from evaluation, 20 particles were selected as observation subjects from among other particles of the particulate polymer, the cross-sections of these observation subjects were observed on a screen, and the number of island-like separated phases was visually measured. The number of island phases per unit area of 1 µm² was calculated from the total area of observation regions that were randomly set for the particles serving as observation subjects and the total number of island-like separated phases present in these observation regions.

### <Process adhesiveness>

A positive electrode, a negative electrode, and a functional layer-equipped separator produced in each example or comparative example were each cut out as 10 mm in width and 50 mm in length. A test specimen was obtained by stacking the positive electrode with the separator or stacking the negative electrode with the separator, and then performing 10 seconds of pressing using a flat plate press with a temperature of 80°C and a load of 0.5 kN. The test specimen was placed with the surface at the current collector-side of the negative electrode facing downward, and cellophane tape was affixed to the surface of the electrode. Tape prescribed by JIS Z1522 was used as the cellophane tape. Moreover, the cellophane tape was fixed to a horizontal test stage in advance. One end of the separator substrate was pulled vertically upward at a pulling speed of 50 mm/min to peel off the separator substrate, and the stress during this peeling was measured.

Three separately produced test specimens of a positive electrode and a separator were used perform a total of three stress measurements in the same manner as when the negative electrode was used as described above.

An average value of the total of three stresses obtained through measurement using the positive electrode and the negative electrode was determined as the peel strength (N/m) and was evaluated by the following standard as the process adhesiveness of an electrode and a separator via a functional layer. A larger peel strength indicates better process adhesiveness.
A: Peel strength of 3 N/m or more
B: Peel strength of less than 3 N/m

### <Adhesiveness after immersion in electrolyte solution>

A functional layer-equipped separator was cut out as a strip shape of 10 mm × 50 mm. The functional layer-equipped separator was placed along a surface of the functional layer of the functional layer-equipped negative electrode so as to produce a laminate including the negative electrode and the functional layer-equipped separator, which was taken to be a test specimen.

The test specimen was placed in laminate packing with approximately 300 µL of electrolyte solution. After 12 hours had passed, the test specimen, together with the laminate packing, was subjected to 20 minutes of hot pressing using a flat plate press with a temperature of 80°C and a load of 0.5 kN to produce a laminate including the negative electrode and the functional layer-equipped separator. Note that a solution obtained by dissolving LiPF₆ as a supporting electrolyte with a concentration of 1 mol/L in a mixed solvent of EC, DEC, and vinylene carbonate (VC) (EC/DEC/VC (volume mixing ratio at 25°C) = 68.5/30/1.5) was used as the electrolyte solution.

The test specimen was subsequently removed, and electrolyte solution on the surface of the test specimen was wiped off. Next, the test specimen was placed with the surface at the current collector-side of the negative electrode facing downward, and cellophane tape was attached to the surface at the current collector-side of the negative electrode. Tape prescribed by JIS Z1522 was used as the cellophane tape. The cellophane tape was fixed to a horizontal test stage in advance. One end of the separator was pulled vertically upward at a pulling speed of 50 mm/min to peel off the separator, and the stress during this peeling was measured. Three measurements were made in this manner. An average value of the stress was determined as the peel strength P and was evaluated by the following standard. The evaluation results are shown in Table 1. A larger peel strength P indicates better adhesiveness of the functional layer in electrolyte solution and stronger adhesion of the negative electrode and the separator.
A: Peel strength P2 of 5.0 N/m or more
B: Peel strength P2 of not less than 3.0 N/m and less than 5.0 N/m
C: Peel strength P2 of less than 3.0 N/m

### <Heat resistance of functional layer>

An adhered product of a functional layer-equipped separator and electrodes produced in each example or comparative example was cut out as a circle of 1.6 cm in diameter to obtain a test specimen. The test specimen was loaded into a pressure-resistant vessel with a mixed solvent of EC, DEC, and vinylene carbonate (VC) (EC/DEC/VC (volume mixing ratio at 25°C) = 68.5/30/1.5), was placed inside a 150°C constant-temperature tank and left for 1 hour, and was subsequently left to cool and then removed. After wiping off solvent from the removed sample, either the positive electrode or the negative electrode was carefully peeled off, and then the diameter of the separator attached to the positive electrode or the negative electrode was measured. The heat shrinkage rate was determined by: {1 - ((longest diameter part of circle of post-heating separator (cm) ÷ 1.6 (cm)) + (shortest diameter part of circle of post-heating separator (cm) ÷ 1.6 (cm))) ÷ 2} × 100, and this heat shrinkage rate was evaluated by the following standard. A smaller heat shrinkage rate indicates that the functional layer-equipped separator has better heat resistance.
A: Heat shrinkage rate of less than 3%
B: Heat shrinkage rate of not less than 3% and less than 5%
C: Heat shrinkage rate of 5% or more

### <Blocking resistance of functional layer>

Two pieces having a size of 4 cm in width by 4 cm in length were cut out as test specimens from a functional layer-equipped separator produced in each example or comparative example. The two obtained test specimens were stacked with the respective functional layer-sides thereof facing each other and were pressed for 2 minutes using a flat plate press with a temperature of 40°C and a load of 8 kN to obtain a pressed product. One end of the obtained pressed product was fixed in place and the other end of the pressed product was pulled vertically upward with a pulling speed of 50 mm/min to cause peeling. The stress during peeling was measured, and the determined stress was taken to be the blocking strength. The blocking strength was evaluated by the following standard. A smaller blocking strength indicates better inhibition of blocking by the functional layer (i.e., that the functional layer has higher blocking resistance).
A: Less than 2 N/m
B: 2 N/m or more

### <Electrolyte solution injectability>

Electrolyte solution was injected into a lithium ion secondary battery produced in each example or comparative example. A state in which the inside of the lithium ion secondary battery was depressurized to -100 kPa was maintained for 1 minute. Thereafter, heat sealing was performed. After 10 minutes, an electrode (positive electrode) was dismantled, and the impregnation state of electrolyte solution in the electrode was visually confirmed. An evaluation was made by the following standard. Impregnation of a greater portion of an electrode with electrolyte solution indicates higher electrolyte solution injectability.
A: Entire surface of electrode impregnated with electrolyte solution
B: Portion of less than 1 cm² in electrode remains unimpregnated with electrolyte solution (excluding case in which entire surface is impregnated)
C: Portion of not less than 1 cm² and less than 1.5 cm² in electrode remains unimpregnated with electrolyte solution

### <Rate characteristics of secondary battery>

An 800 mAh stacked lithium ion secondary battery produced in each example or comparative example was left at rest in a 25°C environment for 24 hours, was then subjected to a charge/discharge operation of charging to 4.35 V at 0.1C and discharging to 3.0 V at 0.1C in a 25°C environment, and the initial capacity C₀ was measured. The lithium ion secondary battery was subsequently subjected to a charge/discharge operation of charging to 4.35 V at 0.1C and discharging to 3.0 V at 2C in a 25°C environment, and the capacity Ci was measured. Rate characteristics were evaluated by ΔC =100- (C₀ - C₁)/C₀ × 100(%), with a larger value indicating better rate characteristics.
A: ΔC of 90% or more
B: ΔC of less than 90%

### <Cycle characteristics of secondary battery>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was subsequently subjected to 12 hours of aging at a temperature of 60°C. The lithium ion secondary battery was then discharged to a cell voltage of 3.00 V by a 0.2C constant-current method at a temperature of 25°C. Thereafter, the lithium ion secondary battery was subjected to CC-CV charging by a 0.2C constant-current method (upper limit cell voltage: 4.20 V) and CC discharging to 3.00 V by a 0.2C constant-current method. This charging and discharging at 0.2C was repeated three times.

Thereafter, the lithium ion secondary battery was subjected to 100 cycles of a charge/discharge operation with a cell voltage of 4.20 V to 3.00 V and a charge/discharge rate of 1.0C in an environment having a temperature of 25°C. In this cycling, the discharge capacity of the 1^{st} cycle was defined as X1, and the discharge capacity of the 100^{th} cycle was defined as X2.

The discharge capacity X1 and the discharge capacity X2 were used to determine a capacity maintenance rate ΔC' (= (X2/X1) × 100(%)) that was then evaluated by the following standard. A larger value for the capacity maintenance rate ΔC' indicates that a secondary battery has better cycle characteristics when subjected to 100 cycles. Note that excellent cycle characteristics of a secondary battery when subjected to 100 cycles are presumed to be a result of good retention of electrolyte solution by a functional layer included in the secondary battery.
A: Capacity maintenance rate ΔC' of 93% or more
B: Capacity maintenance rate ΔC' of not less than 90% and less than 93%
C: Capacity maintenance rate ΔC' of less than 90%

### (Example 1)

### <Production of polymer (A)>

A reactor A including a stirrer was charged with 0.20 parts of sodium dodecyl sulfate, 0.40 parts of ammonium persulfate, and 180 parts of deionized water. These materials were mixed to obtain a mixture and were heated to 65°C. Meanwhile, a polymer A monomer composition was produced in a separate vessel by mixing 81 parts of methyl methacrylate and 17.6 parts of butyl acrylate as monofunctional (meth)acrylic acid ester monomers, 0.4 parts of methacrylic acid as an acidic group-containing monomer, 1 part of allyl methacrylate as a cross-linkable monomer, 0.8 parts of sodium dodecyl sulfate, and 40 parts of deionized water. The polymer A monomer composition was continuously added into the above-described reactor A over 4 hours to perform a polymerization reaction. The temperature inside the reactor was maintained at 65°C during continuous addition of the polymer A monomer composition. Once the continuous addition was complete, the polymerization reaction was continued at 80°C for a further 3 hours. This yielded a water dispersion of a polymer (A). The volume-average particle diameter of the polymer (A) was measured according to the previously described method.

### <Production of monomer composition (B)>

A monomer composition (B) was produced by mixing 81.9 parts of styrene as an aromatic vinyl monomer, 18 parts of 2-ethylhexyl acrylate as a (meth)acrylic acid ester monomer, and 0.1 parts of ethylene glycol dimethacrylate as a cross-linkable monomer.

### <Production of metal hydroxide>

A colloidal dispersion liquid (A) containing magnesium hydroxide as a metal hydroxide was produced by gradually adding an aqueous solution (A2) of 5.6 parts of sodium hydroxide dissolved in 50 parts of deionized water to an aqueous solution (A1) of 8.0 parts of magnesium chloride dissolved in 200 parts of deionized water under stirring.

### [Suspension polymerization]

A particulate polymer was produced by suspension polymerization. Specifically, the polymer (A) and the monomer composition (B) obtained as described above were added to the colloidal dispersion liquid (A) containing magnesium hydroxide, were further stirred therewith, and then 2.0 parts of t-butyl peroxy-2-ethylhexanoate (PERBUTYL O produced by NOF Corporation) was added as a polymerization initiator to yield a mixture. Note that in addition of the polymer (A), the water dispersion of the polymer (A) was weighed out in an amount such that the amount of solid content was 1% (by mass) based on the total amount of solid content of monomer components contained in the monomer composition (B). The obtained mixture was subjected to 1 minute of high-shear stirring at a rotation speed of 15,000 rpm using an inline emulsifying/dispersing device (CAVITRON produced by Pacific Machinery & Engineering Co., Ltd.) so as to form droplets of the monomer composition (B) containing the polymer (A) in the colloidal dispersion liquid (A) containing magnesium hydroxide.

The magnesium hydroxide-containing colloidal dispersion liquid (A) in which droplets of the monomer composition (B) had been formed was loaded into a reactor, the temperature was raised to 90°C, and a polymerization reaction was performed for 5 hours to yield a water dispersion containing a particulate polymer (A).

The water dispersion containing the particulate polymer was stirred while sulfuric acid was added dropwise at room temperature (25°C) so as to perform acid washing until the pH reached 6.5 or lower. Next, separation was performed by filtration, a slurry was reformed through addition of 500 parts of deionized water to the resultant solid content, and water washing treatment (washing, filtration, and dehydration) was repeated a number of times. Thereafter, separation was performed by filtration to obtain solid content that was then loaded into a vessel of a dryer and was dried at 40°C for 48 hours to obtain a dried particulate polymer.

The volume-average particle diameter of the obtained particulate polymer was measured as previously described. In addition, cross-section observation using a transmission electron microscope was performed as previously described. The results are shown in Table 1.

### <Production of water dispersion containing binder (α)>

A reactor including a stirrer was supplied with 70 parts of deionized water, 0.15 parts of sodium lauryl sulfate (EMAL^{®} 2F (EMAL is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.

Meanwhile, a monomer composition (α) was produced in a separate vessel by mixing 50 parts of deionized water, 0.5 parts of sodium dodecylbenzenesulfonate as a dispersion stabilizer, 94 parts of n-butyl acrylate as a (meth)acrylic acid ester monomer, 2 parts of methacrylic acid as an acid group-containing monomer, 2 parts of acrylonitrile as a nitrile group-containing monomer, and 1 part of allyl methacrylate and 1 part of allyl glycidyl ether as cross-linkable monomers.

The obtained monomer composition (α) was continuously added into the above-described reactor including a stirrer over 4 hours to perform polymerization. The reaction was carried out at 60°C during the addition. Once the addition was complete, a further 3 hours of stirring was performed at 70°C, and then the reaction was ended to yield a water dispersion containing a particulate binder (α) as an acrylic polymer. The obtained binder (α) had a volume-average particle diameter of 0.25 µm and a glass-transition temperature of -40°C.

### <Production of slurry composition (composition for functional layer)>

A pre-mixing slurry was obtained by adding 0.5 parts of polyacrylic acid as a water-soluble polymer to 100 parts of alumina (AKP3000 produced by Sumitomo Chemical Co., Ltd.; volume-average particle diameter: 0.7 µm) as heat-resistant fine particles, adjusting the solid content concentration to 55% through addition of deionized water, and performing mixing using a ball mill.

Next, 0.2 parts of sodium dodecylbenzenesulfonate (NEOPELEX G-15 produced by Kao Corporation) was added as a dispersant relative to 100 parts of the particulate polymer. In addition, 6 parts in terms of solid content of the water dispersion containing the binder (α) and 1.5 parts of carboxymethyl cellulose as a thickener relative to 100 parts of the heat-resistant fine particles were mixed such that the solid content concentration was 40%, and the resultant mixture was added to the pre-mixing slurry obtained as described above. Note that the mixing ratio was adjusted such that the volume ratio of the heat-resistant fine particles (alumina) and the particulate polymer in the slurry composition (heat-resistant fine particles/particulate polymer) was 70/30. The solid content concentration was further adjusted to 40% through addition of deionized water to yield a slurry composition (composition for a functional layer).

### <Production of functional layer-equipped separator>

A microporous membrane made of polyethylene (thickness: 12 µm; Gurley value: 100 s/100 cc) was prepared as a separator substrate. The composition for a functional layer obtained as described above was applied onto one side of the prepared separator substrate by bar coating. Drying of the coating film was performed at 50°C. The same operations were performed with respect to the other side of the separator substrate to produce a functional layer-equipped separator including functional layers each having a heat-resistant fine particle layer thickness of 2.0 µm at both sides of the separator substrate. Blocking resistance was evaluated as previously described for the obtained functional layer-equipped separator. The result is shown in Table 1.

### <Production of positive electrode>

A slurry composition for a positive electrode was produced by mixing 100 parts of LiCoO₂ (volume-average particle diameter: 12 µm) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder for a positive electrode mixed material layer, and N-methylpyrrolidone as a solvent, adjusting the total solid content concentration to 70%, and mixing these materials in a planetary mixer.

The slurry composition for a positive electrode was applied onto aluminum foil of 20 µm in thickness serving as a current collector by a comma coater such as to have a thickness after drying of approximately 150 µm. The applied slurry composition was dried by conveying the aluminum foil inside a 60°C oven for 2 minutes at a speed of 0.5 m/min. Thereafter, 2 minutes of heat treatment was performed at 120°C to obtain a pre-pressing positive electrode web. The pre-pressing positive electrode web was rolled by roll pressing to obtain a post-pressing positive electrode including a positive electrode mixed material layer (thickness: 60 µm).

### <Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. The reaction was quenched by cooling at the point at which the polymerization conversion rate reached 96% to yield a mixture containing a binder (SBR) for a negative electrode mixed material layer. The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to 30°C or lower to yield a water dispersion containing the desired binder for a negative electrode mixed material layer.

After compounding 80 parts of artificial graphite (volume-average particle diameter: 15.6 µm) as a negative electrode active material (1) and 16 parts of a silicon-based active material SiOₓ (volume-average particle diameter: 4.9 µm) as a negative electrode active material (2) and then mixing 2.5 parts in terms of solid content of a 2% aqueous solution of carboxymethyl cellulose sodium salt (MAC350HC produced by Nippon Paper Industries Co., Ltd.) as a viscosity modifier and deionized water therewith so as to adjust the solid content concentration to 68%, these materials were mixed at 25°C for 60 minutes. The solid content concentration was further adjusted to 62% with deionized water, and a further 15 minutes of mixing was performed at 25°C to yield a mixture. Deionized water and 1.5 parts in terms of solid content of the water dispersion containing the binder for a negative electrode mixed material layer described above were added to this mixture, the final solid content concentration was adjusted to 52%, and 10 minutes of mixing was performed to obtain a mixture. This mixture was subjected to defoaming under reduced pressure to yield a slurry composition for a negative electrode having good fluidity.

The slurry composition for a negative electrode was applied onto copper foil of 20 µm in thickness serving as a current collector by a comma coater such as to have a thickness after drying of approximately 150 µm. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode including a negative electrode mixed material layer (thickness: 80 µm).

### <Production of lithium ion secondary battery>

The post-pressing positive electrode produced as described above was cut out as a rectangle of 49 cm × 5 cm and was placed with the surface at the positive electrode mixed material layer-side facing upward. The functional layer-equipped separator was cut out as 120 cm × 5.5 cm and was arranged on this positive electrode mixed material layer such that the positive electrode was positioned at one longitudinal direction side of the functional layer-equipped separator. In addition, the post-pressing negative electrode produced as described above was cut out as a rectangle of 50 cm × 5.2 cm and was arranged on the functional layer-equipped separator such that the surface at the negative electrode mixed material layer-side faced toward the functional layer-equipped separator and the negative electrode was positioned at the other longitudinal direction side of the functional layer-equipped separator. In the above, a front surface of the functional layer-equipped separator was arranged such as to face the positive electrode and a rear surface of the functional layer-equipped separator was arranged such as to face the negative electrode. The resultant laminate was wound by a winding machine to obtain a roll.

This roll was pressed into a flattened form at 50°C and 1 MPa, was subsequently enclosed in an aluminum packing case serving as a battery case, and electrolyte solution (solvent: ethylene carbonate/diethyl carbonate/vinylene carbonate (volume ratio) = 68.5/30/1.5; electrolyte: LiPF₆ of 1 mol in concentration) was injected such that no air remained. An opening of the aluminum packing case was heat sealed at a temperature of 150°C so as to close the aluminum packing case and produce a wound lithium ion secondary battery having a capacity of 800 mAh.

The obtained lithium ion secondary battery was used to evaluate injectability and secondary battery rate characteristics and cycle characteristics. The results are shown in Table 1.

### (Example 2)

Production and various measurements and evaluations were performed in the same way as in Example 1 with the exception that in production of the slurry composition of Example 1, the additive amount of the polymer A was adjusted such as to be 0.3% when the monomer composition B was taken to be 100% by mass. The results are shown in Table 1.

### (Example 3)

Production and various measurements and evaluations were performed in the same way as in Example 1 with the exception that in production of the slurry composition of Example 1, the additive amount of the polymer A was adjusted such as to be 0.1% when the monomer composition B was taken to be 100% by mass. The results are shown in Table 1.

### (Example 4)

Production and various measurements and evaluations were performed in the same way as in Example 1 with the exception that in production of the slurry composition of Example 1, the additive amount of the polymer A was adjusted such as to be 6.0% when the monomer composition B was taken to be 100. The results are shown in Table 1.

### (Example 5)

Various operations, measurements, and evaluations were performed in the same way as in Example 1 with the exception that conditions in production of the polymer (A) were changed as described below so as to obtain a polymer (A2). The results are shown in Table 1.

### <Production of polymer (A2)>

A water dispersion of a polymer (A2) was obtained in the same way as in Example 1 with the exception that the amount of sodium dodecyl sulfate was changed to 0.15 parts and the amount of ammonium persulfate was changed to 0.20 parts in production of the monomer composition and that the polymerization reaction time under conditions of 80°C following 4 hours of polymerization reaction under conditions of 65°C was set as 5 hours. The volume-average particle diameter of the polymer (A2) was measured according to the previously described method.

### (Example 6)

In production of the slurry composition, heat-resistant fine particles were not compounded, and 0.2 parts of sodium dodecylbenzenesulfonate (NEOPELEX G-15 produced by Kao Corporation) was added as a dispersant relative to 100 parts of the particulate polymer. In addition, 10 parts in terms of solid content of the water dispersion containing the binder (α) was mixed relative to 100 parts of the particulate polymer, and the resultant mixture was diluted with deionized water to yield a composition for a functional layer (solid content concentration: 10%) in the form of a slurry. In production of the functional layer-equipped separator, the slurry composition was applied onto one side of the same type of separator substrate as used in Example 1 by bar coating such as to have a coating weight after drying of 0.3 g/m². Next, the separator with the slurry composition applied thereon was dried at 50°C for 1 minute to obtain a separator including a functional layer at one side. The same operations as described above were performed with respect to the other side of the separator substrate to produce a functional layer-equipped separator including functional layers at both sides of the separator substrate.

With the exception of these points, various operations, measurements (with the exception of thickness of a heat-resistant fine particle layer and ratio of volume-average particle diameter D50 of a particulate polymer and thickness T of a heat-resistant fine particle layer), and evaluations were performed in the same way as in Example 1. The results are shown in Table 1.

### (Example 7)

Various operations, measurements, and evaluations were performed in the same way as in Example 6 with the exception that in production of the particulate polymer, the step of producing a metal hydroxide was not performed, and the suspension polymerization conditions were changed as described below. The results are shown in Table 1. More specifically, in Example 7, a slurry composition containing a particulate polymer A2 having a different volume-average particle diameter to in Example 1 and not containing heat-resistant fine particles was produced, a secondary battery, etc. were produced, and these were subjected to various evaluations (with the exception of thickness of a heat-resistant fine particle layer and ratio of volume-average particle diameter D50 of a particulate polymer and thickness T of a heat-resistant fine particle layer).

### <Suspension polymerization in step of producing particulate polymer>

A mixture was obtained by supplying 400 parts of deionized water and 1 part of sodium dodecylbenzenesulfonate as a dispersion stabilizer into a reactor including a stirrer, subsequently adding the polymer (A) and the monomer composition (B), performing stirring thereof, and then adding 2.0 parts of t-butyl peroxy-2-ethylhexanoate (PERBUTYL O produced by NOF Corporation) as a polymerization initiator. Note that in addition of the polymer (A), the water dispersion of the polymer (A) was weighed out in an amount such that the amount of solid content was 1% (by mass) based on the total amount of solid content of monomer components contained in the monomer composition (B). The obtained mixture was subjected to 1 minute of high-shear stirring at a rotation speed of 15,000 rpm using an inline emulsifying/dispersing device (CAVITRON produced by Pacific Machinery & Engineering Co., Ltd.) so as to form droplets of the monomer composition (B2). The dispersion liquid (A2) in which droplets of the monomer composition (B2) had been formed was loaded into a reactor, the temperature was raised to 90°C, and a polymerization reaction was performed for 5 hours to yield a water dispersion containing a particulate polymer (A2).

### (Example 8)

Various operations, measurements, and evaluations were performed in the same way as in Example 1 with the exception that a particulate polymer (A2) produced in the same way as in Example 7 was used in production of the slurry composition. The results are shown in Table 1.

### (Example 9)

Various operations, measurements, and evaluations were performed in the same way as in Example 1 with the exception that in production of the particulate polymer, conditions in production of the polymer (A) were changed as described below so as to obtain a polymer (A3). The results are shown in Table 1.

### <Production of polymer (A3)>

A reactor A including a stirrer was charged with 0.20 parts of sodium dodecyl sulfate, 0.40 parts of ammonium persulfate, and 180 parts of deionized water. These materials were mixed to obtain a mixture and were heated to 65°C. Meanwhile, a polymer A3 monomer composition was produced in a separate vessel by mixing 32 parts of methyl methacrylate and 63.6 parts of butyl acrylate as monofunctional (meth)acrylic acid ester monomers, 0.4 parts of methacrylic acid as an acidic group-containing monomer, 3 parts of allyl methacrylate as a cross-linkable monomer, 0.8 parts of sodium dodecyl sulfate, and 40 parts of deionized water. This polymer A monomer composition was subjected to a polymerization reaction under the same conditions as in Example 1 to obtain a water dispersion of a polymer (A3).

### (Example 10)

Various operations, measurements, and evaluations were performed in the same way as in Example 1 with the exception that a monomer composition (B2) produced as described below was used in production of the particulate polymer. The results are shown in Table 1.

### <Production of monomer composition (B2)>

A monomer composition (B2) was produced by mixing 71.9 parts of styrene as an aromatic vinyl monomer, 10 parts of methyl methacrylate and 18 parts of butyl acrylate as (meth)acrylic acid ester monomers, and 0.1 parts of ethylene glycol dimethacrylate as a cross-linkable monomer.

### (Example 11)

Various operations, measurements, and evaluations were performed in the same way as in Example 1 with the exception that in production of the particulate polymer, conditions in production of the polymer (A) were changed as described below so as to obtain a polymer (A4). The results are shown in Table 1.

### <Production of polymer (A4)>

A reactor A including a stirrer was charged with 0.20 parts of sodium dodecyl sulfate, 0.40 parts of ammonium persulfate, and 180 parts of deionized water. These materials were mixed to obtain a mixture and were heated to 65°C. Meanwhile, a polymer A4 monomer composition was produced in a separate vessel by mixing 76 parts of methyl methacrylate and 17.6 parts of butyl acrylate as monofunctional (meth)acrylic acid ester monomers, 0.4 parts of methacrylic acid as an acidic group-containing monomer, 5 parts of allyl methacrylate as a cross-linkable monomer, 0.8 parts of sodium dodecyl sulfate, and 40 parts of deionized water. The produced polymer A4 monomer composition was polymerized under the same conditions as in Example 1 to obtain a water dispersion of a polymer (A4).

### (Example 12)

Various operations, measurements, and evaluations were performed in the same way as in Example 1 with the exception that organic fine particles produced as described below were used instead of alumina particles as heat-resistant fine particles in production of the composition for a functional layer. The results are shown in Table 1.

### <Production of organic fine particles (heat-resistant fine particles)>

A reactor A including a stirrer was charged with 0.20 parts of sodium dodecyl sulfate, 0.30 parts of ammonium persulfate, and 180 parts of deionized water. These materials were mixed to obtain a mixture and were heated to 65°C. Meanwhile, a monomer composition for seed particles was produced in a separate vessel by mixing 80.0 parts of n-butyl acrylate as a (meth)acrylic acid ester monomer, 10.0 parts of methacrylic acid as an acid group-containing monomer, 10.0 parts of acrylonitrile as a nitrile group-containing monomer, 0.8 parts of sodium dodecyl sulfate, and 40 parts of deionized water.

This monomer composition for seed particles was continuously added into the above-described reactor A over 4 hours to perform a polymerization reaction. The temperature inside of the reactor was maintained at 65°C during continuous addition of the monomer composition for seed particles. Once the continuous addition was complete, the polymerization reaction was continued for a further 3 hours at 80°C. This yielded a water dispersion of seed particles.

Next, a reactor including a stirrer was charged with 20 parts in terms of solid content of the water dispersion of seed particles (composed of 16 parts of n-butyl acrylate units, 2 parts of methacrylic acid units, and 2 parts of acrylonitrile units), 80 parts of ethylene glycol dimethacrylate (Kyoeisha Chemical Co., Ltd.; product name: LIGHT ESTER EG) as a cross-linkable monomer, 0.8 parts of sodium dodecylbenzenesulfonate, 3.2 parts of t-butyl peroxy-2-ethylhexanoate (produced by NOF Corporation; product name: PERBUTYL O) as a polymerization initiator, and 160 parts of deionized water. These materials were stirred at 35°C for 12 hours to cause complete absorption of the cross-linkable monomer and the polymerization initiator by the seed particles. Thereafter, the temperature inside of the reactor was maintained at 90°C, and a polymerization reaction (seeded polymerization) was performed for 5 hours.

Next, steam was introduced into the reactor, and unreacted monomer and initiator decomposition product were removed to yield a water dispersion of organic fine particles. Upon measurement of the glass-transition temperature of the obtained organic fine particles by the same method as for adhesive particles and a binder, a peak was not observed in the measurement temperature range (-100°C to 200°C). As a result, the glass-transition temperature of the organic fine particles was confirmed to be higher than 200°C.

### (Comparative Example 1)

Various operations, measurements, and evaluations were performed in the same way as in Example 1 with the exception that the polymer A was not added in production of the particulate polymer. The results are shown in Table 1.

### (Comparative Example 2)

Various operations, measurements, and evaluations were performed in the same way as in Example 1 with the exception that a particulate polymer having a multi-layer structure (core-shell structure) that was produced as described below was used. The results are shown in Table 1.

### <Production of particulate polymer>

### <<Production of core monomer composition>>

A core monomer composition was produced by mixing 81.9 parts of styrene as an aromatic vinyl monomer, 18 parts of 2-ethylhexyl acrylate as a (meth)acrylic acid ester monomer, and 0.1 parts of ethylene glycol dimethacrylate as a cross-linkable monomer.

### <<Production of shell monomer composition>>

A shell monomer composition was produced by mixing 81 parts of methyl methacrylate and 17.6 parts of butyl acrylate as monofunctional (meth)acrylic acid ester monomers, 0.4 parts of methacrylic acid as an acidic group-containing monomer, and 1 part of allyl methacrylate as a cross-linkable monomer.

### <<Production of metal hydroxide>>

A colloidal dispersion liquid containing magnesium hydroxide as a metal hydroxide was produced by gradually adding an aqueous solution of 5.6 parts of sodium hydroxide dissolved in 50 parts of deionized water to an aqueous solution of 8.0 parts of magnesium chloride dissolved in 200 parts of deionized water under stirring.

### [Suspension polymerization]

A particulate polymer was produced by suspension polymerization. Specifically, the core monomer composition obtained as described above was added to the colloidal dispersion liquid containing magnesium hydroxide, was further stirred therewith, and then 2.0 parts of t-butyl peroxy-2-ethylhexanoate (PERBUTYL O produced by NOF Corporation) was added as a polymerization initiator to yield a mixture. The obtained mixture was subjected to 1 minute of high-shear stirring at a rotation speed of 15,000 rpm using an inline emulsifying/dispersing device (CAVITRON produced by Pacific Machinery & Engineering Co., Ltd.) so as to form droplets of the core monomer composition in the colloidal dispersion liquid containing magnesium hydroxide.

The magnesium hydroxide-containing colloidal dispersion liquid in which droplets of the monomer composition had been formed was loaded into a reactor, the temperature was raised to 90°C, and a polymerization reaction was performed. At the point at which the polymerization conversion rate had reached almost 100%, 1 part of the shell monomer composition and 0.1 parts of 2,2'-azobis(2-methyl-N-(2-hydroxyethyl)propionamide) (produced by FUJIFILM Wako Pure Chemical Corporation; product name: VA-086; water-soluble) as a shell polymerization initiator dissolved in 10 parts of deionized water were added, the reaction was continued at 90°C for 4 hours, and then water cooling was performed to quench the reaction and subsequently yield a water dispersion containing a particulate polymer. Note that in addition of the shell monomer composition, the additive amount was set as 1 part relative to 100 parts of the core monomer composition.

### (Comparative Example 3)

Various operations, measurements, and evaluations were performed in the same way as in Example 6 with the exception that the particulate polymer produced in Comparative Example 1 was used as a particulate polymer. In other words, in Comparative Example 3, a slurry composition containing a particulate polymer that did not have a sea-island structure and not containing heat-resistant fine particles was produced, a secondary battery, etc. were produced, and these were subjected to various evaluations (with the exception of thickness of a heat-resistant fine particle layer and ratio of volume-average particle diameter D50 of a particulate polymer and thickness T of a heat-resistant fine particle layer). The results are shown in Table 1.

In Table 1:
"AA" indicates acrylic acid;
"MMA" indicates methyl methacrylate;
"BA" indicates n-butyl acrylate;
"ST" indicates styrene;
"2EHA" indicates 2-ethylhexyl acrylate;
"EDMA" indicates ethylene glycol dimethacrylate;
"AN" indicates acrylonitrile;
"AMA" indicates allyl methacrylate;
"MAA" indicates methacrylic acid; and
"AGE" indicates allyl glycidyl ether.

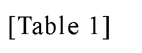

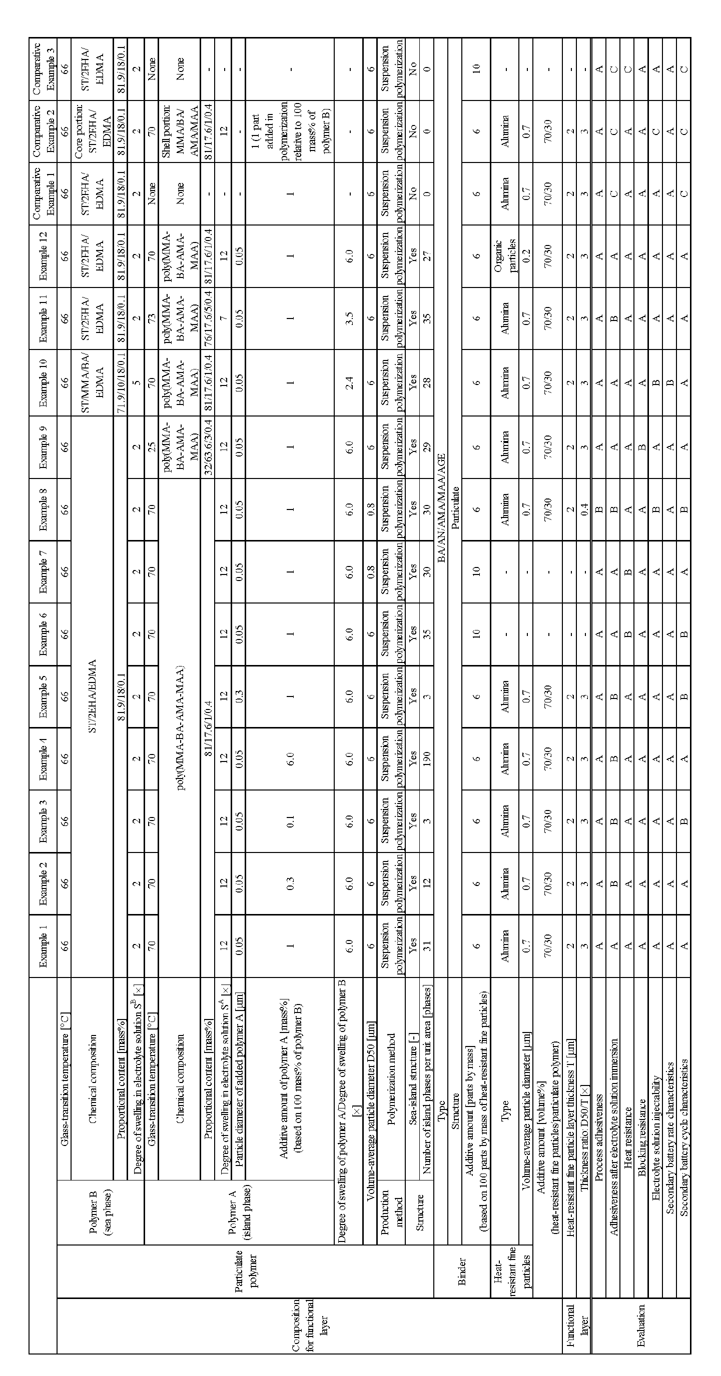

It can be seen from Table 1 that each of the compositions for a functional layer according to Examples 1 to 12 contained a particulate polymer having a novel structure.

### INDUSTRIAL APPLICABILITY

According to the present disclosure, it is possible to provide a composition for a functional layer containing a particulate polymer that has a novel structure and a method of producing this composition for a functional layer. Moreover, according to the present disclosure, it is possible to provide a laminate for an electrochemical device that includes a functional layer for an electrochemical device formed using the presently disclosed composition for a functional layer and an electrochemical device that includes this laminate for an electrochemical device.

## Claims

1. A composition for an electrochemical device functional layer comprising a particulate polymer and a binder, wherein
the particulate polymer has a sea-island structure including an island phase formed of a polymer A and a sea phase formed of a polymer B, and
the particulate polymer satisfies a number of the island phase per unit area of 1 µm² being not less than 1 and not more than 200 as calculated by: acquiring a cross-sectional image of a plurality of particles of the particulate polymer; selecting and adopting as observation subjects a plurality of cross-sections each having a circumscribed circle diameter within a range of not less than 0.6 times and not more than 1.2 times volume-average particle diameter of the particulate polymer from among cross-sections of the plurality of particles of the particulate polymer that are included in the cross-sectional image; and calculating a number of island phases having a diameter that is 1/5 or less of the volume-average particle diameter per unit area of 1 µm² for the plurality of cross-sections of the particulate polymer that are selected as observation subjects.

2. The composition for an electrochemical device functional layer according to claim 1, wherein the volume-average particle diameter of the particulate polymer is not less than 1.0 µm and not more than 10.0 µm.

3. The composition for an electrochemical device functional layer according to claim 1 or 2, further comprising heat-resistant fine particles.

4. The composition for an electrochemical device functional layer according to any one of claims 1 to 3, wherein the polymer A includes a (meth)acrylic acid ester monomer unit.

5. The composition for an electrochemical device functional layer according to any one of claims 1 to 4, wherein the polymer A has a glass-transition temperature of higher than 20°C and not higher than 90°C.

6. The composition for an electrochemical device functional layer according to any one of claims 1 to 5, wherein a content ratio of the polymer A based on contained mass of the polymer B is not less than 0.1 mass% and not more than 20 mass%.

7. The composition for an electrochemical device functional layer according to any one of claims 1 to 6, wherein the polymer B has a degree of swelling in electrolyte solution S^{B} of not less than ×1.0 and not more than ×8.0.

8. The composition for an electrochemical device functional layer according to any one of claims 1 to 7, wherein the polymer A has a degree of swelling in electrolyte solution S^{A} of ×4.0 or more.

9. The composition for an electrochemical device functional layer according to any one of claims 1 to 8, wherein a degree of swelling in electrolyte solution S^{A} of the polymer A is at least 1.2 times a degree of swelling in electrolyte solution S^{B} of the polymer B.

10. A method of producing the composition for an electrochemical device functional layer according to any one of claims 1 to 9, comprising producing the particulate polymer by a suspension polymerization method, a dissolution and suspension method, or a pulverization method.

11. A functional layer for an electrochemical device formed using the composition for an electrochemical device functional layer according to claim 3, wherein
the functional layer for an electrochemical device has a structure in which the particulate polymer is partially embedded in a heat-resistant fine particle layer containing the heat-resistant fine particles, and
the volume-average particle diameter of the particulate polymer is larger than a thickness of the heat-resistant fine particle layer.

12. A laminate for an electrochemical device comprising:
a substrate; and
a functional layer for an electrochemical device formed on the substrate, wherein
the functional layer for an electrochemical device is a functional layer for an electrochemical device formed using the composition for an electrochemical device functional layer according to any one of claims 1 to 9.

13. An electrochemical device comprising the laminate for an electrochemical device according to claim 12.
